# EUROPEAN PATENT APPLICATION

(11) **EP 2 053 853 A1**
(43) Date of publication of application: **29.04.2009**
(21) Application number: 08167340.2
(22) Date of filing: 22.10.2008
(51) Int. Cl.: H04N 5/765, H04W 4/02, H04W 64/00

(54) **Detecting the location and identifying a user of an electronic device**

(30) Priority: 26.10.2007 TR 200707353
(71) Applicant: Vestel Elektronik Sanayi ve Ticaret A.S., 45030 Manisa (TR)
(72) Inventor: Sever, Enis, 45030 Manisa (TR)
(74) Representative: Cayli, Hülya

(57) **Abstract**

The present invention relates to a system and method for determining the location of the user of an electronic device, and for identifying the user of such electronic device by conducting face identification on an area determined on an image of the zone of use of such electronic device according to such detected user location. Thus, the present invention both identifies the face of the user of such and electronic device even if the user is present at different locations within the zone of use of such electronic device and activates the user's user profile, and allows for the identification of the user of such electronic device among other persons when there are more than one person within the zone of use of such electronic device. Thus in the electronic devices making use of the present invention, the errors encountered in face identification are reduced, and many options and associated functions towards the electronic device such as the activation of user profiles -by which the user determines his/her preferences in relation to the electronic device or defines the criteria towards using the device- are realized more efficiently in a more errorless manner.

## Description

### Field of Invention

The present invention relates to a system and method, which provides the detection of the location of the user of an electronic device irrespective of an image that shows the zone of use of such electronic device, and provides the identification of such electronic device's user by performing face identification on the image acquired from a dynamic area determined on the image showing the zone of use according to such detected location of user.

### Prior Art

Face identification methods are being used in many applications of electronic systems for user identification purposes. In these methods, face identification approaches are conducted on an image that shows the zone of use of the respective electronic device so that the user whose face is identified is detected. The basic process steps in these methods are the detection of face to be identified and the identification of such detected face by making use of an available image.

The basic problem in face identification is the detection of face to be identified. In the systems used so far, two basic methods have been applied for detecting the face to be identified.

One of said methods is disclosed in the patent application US20070201824A1. According to the embodiment of this patent application, the face identification process is conducted on an image of a predetermined and fixed active zone of use. Here, however, the user must be present in such fixed active zone of use that is previously defined on the respective electronic device. The user identification process fails when the user stays out of this zone, since no image is available or used of another zone.

Another method used for detecting the face to be identified is based on detecting the user by referring to certain parameters on the image of the zone of use to be used for face identification purposes.

One of the current embodiments making use of this method, as disclosed in the patent application JP09107534A2, is based on determining the individual -who is present at the direction of sight of the persons at the zone of use- as the user. This embodiment is used rather in teleconference systems. In this embodiment, it is assumed that the direction of sight of the faces detected on the image of the zone of use is directed to the speaker or to the monitoring device, and such detected face is determined as the face of the user.

A further similar embodiment is based on tracking the actions on an image. It is assumed here that the mobile zone is the image of the user and the face on this image is accordingly defined as the user's face. This embodiment is disclosed in the patent application JP2005191760A2.

In the methods indicated above, the face identification approach is realized by processes conducted only on an image of the zone of use, wherein the user is either required to be present within such predetermined active zone of use for identification of the user or extra processes which increases the system's time and power requirements must be conducted for detecting the current location of the user.

The systems and methods requiring the user's continuous presence in an active zone of use restricts the user's movement, this restriction avoiding the efficient use of the device and reducing user satisfaction.

In cases when there is more than one person in the zone of use of the respective electronic device and accordingly there is a high and distributed mobility/action, the systems tracking the mobility within the zone of use yield erroneous results, since the image of the zone of use is employed only for detecting the user.

Because of the reasons referred to hereinabove, said methods can be used in special applications such as phone and conference calls, i.e. in audio and video communication systems.

Because of the reasons referred to hereinabove, acquiring the user's location information irrespective of the image and making use of this information for face identification purposes shall provide an efficient use of the images of zone of use.

Said location detection methods are already known and are used in many fields.

The most proper one of these methods for use according to the present invention is based on detecting the location of a signal source provided on the user. For this reason, the method finds a broad utilization field, in which a signal sent by a signal source in the currently-used systems is detected by two separate receivers and the power during detection, the difference between the detection times or the phase difference in the signal are determined so that the location of the source of signal is detected with respect to the receivers.

### Objective of Invention

The objective of the present invention is to provide the face detection of the user of an electronic device in an accurate manner, even if the user is located at different locations in the device's zone of use.

Another objective of the present invention is to provide the identification of the user of such electronic device among other persons when more than one person is present in the electronic device's zone of use.

It is hereby provided to conduct many applications via face identification in an errorless manner. For instance, the user profile may be activated as a result of identifying the face of the user. Thus, since the errors encountered during face identification are reduced in an electronic device in which the present invention is used, it becomes possible to use the user profiles more efficiently by which the user determines his/her preferences on the electronic device or defines the criteria towards using the device.

### Description of Figures

Figure 1 illustrates the zone of use indicating the area of the image of the active zone of use, the detected location of the device that is used for determining the location and is provided on the user, and the face to be identified.
Figure 2 illustrates the zone of use in which more than one person is present.
Figure 3 gives a table showing the distance between the user location and the location-detecting or image-taking device and the height and width information of the area of the image of the active zone of use, along with the relation between such parameters.
Figure 4 is a block diagram of a system preferred according to the present invention.
Figure 5 is a block diagram illustrating the process steps of a method preferred according to the present invention.

### Description of Invention

The system and method according to the present invention provides the detection of the location of user of an electronic device in a manner that is independent from the image of the zone of use; the determination of the area of the image of the active zone of use on the image of the zone of use according to the detected location of user; and the identification of user by making use of face identification methods on the image acquired from this area of image.

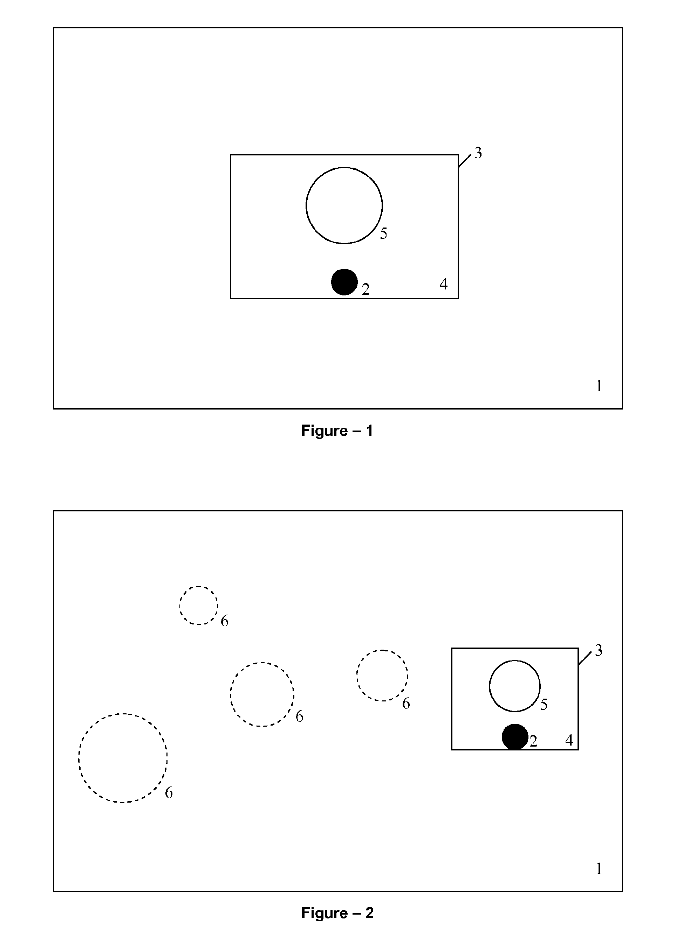

Since the user identification process is carried out by using face identification methods, an image is required that shows the face of the relevant user. In Figure 1, an example of image used for this process is given. Accordingly, on the image of the zone of use (1) showing the zone of use are determined the image of active zone of use (4) in the area of the active zone of use (3) that is calculated according to the detected user location (2) as well as the user's face (5) by using face identification methods on the image of the active zone of use (4).

The most significant feature of the present invention is that the area of the area of the active zone of use (3) is changed in an adaptive and dynamic manner in compliance with perspective rules -and according to the user location (2) detected without making use of the image of the zone of use (1)- and its position on the image of the zone of use (1) is determined. Thus, the image of the active zone of use (4) is fixed on the area of the active zone of use (3). Thus, the face identification techniques are used on the image of the active zone of use (4) that is more specific as compared to the image of the zone of use (1) which depicts a broader area, and thanks to this feature, both the process time is reduced and the problem of conducting erroneous face identification processes is eliminated.

Figure 2 illustrates an image of the zone of use (1), in which more than one person is present. This image illustrates both the user's face (5) and the faces of other persons (6). As can be seen, the area of the active zone of use (3) is disposed at the center of the image of the zone of use (1) in Figure 1 and at the right of the image of the zone of use (2) in Figure 2, taking into account the detected user location (2). At the same time the area of the active zone of use (3) on the image of the zone of use (1) is smaller in Figure 2 as compared to in Figure 1, since the user is at a relatively more distant point from the image-taking device according to the subject system in Figure 2.

Many techniques can be used while determining/calculating the size of the area of the active zone of use (3). The basic criterion for this operation is the distance of the user to the image-taking and/or location-detecting devices.

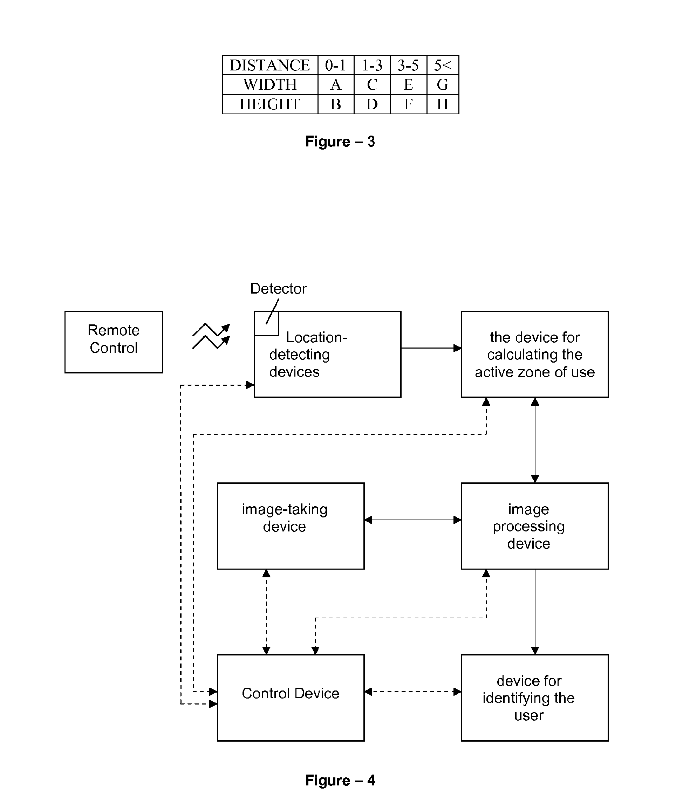

A table can be used in one technique, said table indicating the relations between said distance and the area of the active zone of use. Figure 3 illustrates such a table. With respect to Figure 3, when the distance is between 0 to 1 meter, the width and height of the area of the active zone of use (3) becomes A and B respectively. Likewise when there is a distance of 1 to 2 meters, the width and height of the area of the active zone of use (3) becomes C and D respectively. This table can be prepared by the manufacturer of such electronic device and be saved on a nonvolatile memory. In other cases, the data on such table can be altered by the user and/or by an authorized service.

As another technique of determining the size of the area of the active zone of use (3), a mathematical function or mathematical correlation can be established between the distance information and the width and height information of the area of the active zone of use (3). Assuming that the ratio between the width and height will be constant, only one parameter is required for such calculations. This parameter relates to the distance information. In the simplest approach, the relation between this parameter and the distance information can be defined as a linear function.

The techniques of determining the size of the area of the active zone of use (3) are of course not restricted to such two examples. For instance, it is possible to use in said calculations also the angular information among the user location (2), location-detecting or image-taking device, the center of the zone of use in both said techniques of determining the size of the area of the active zone of use (3).

The shape of the area of the active zone of use may vary according to the location detection techniques used in the system. For instance, if a remote control provided on the user is used for detecting the location, it can be assumed that the remote control is to be located between the abdominal and chest regions of the user. It can also be assumed that the user may be at a sitting or laying position and the area of the active zone of use can be determined accordingly. As another instance, if a device such as an earring is used for location detection purposes, it can be assumed that such device is to be located at the facial region of the user.

Many techniques can be used for detecting the user's location. A preferred system according to the present invention as illustrated in Figure 4 makes use of a technique in which a signal transmitted from a remote control at the user is detected by a signal detector and by a location-detecting device so that the location of the remote control is determined with respect to the location-detecting device.

It is possible to use a special apparatus on the user, in place of said remote control for determining the location in said system.

One or more than one device within the preferred system referred to above can be provided within the same block structure. For instance, the control device controlling the system may accommodate the device for determining the location, the device for calculating the active zone of use, the device for processing the image, and device for identifying the user.

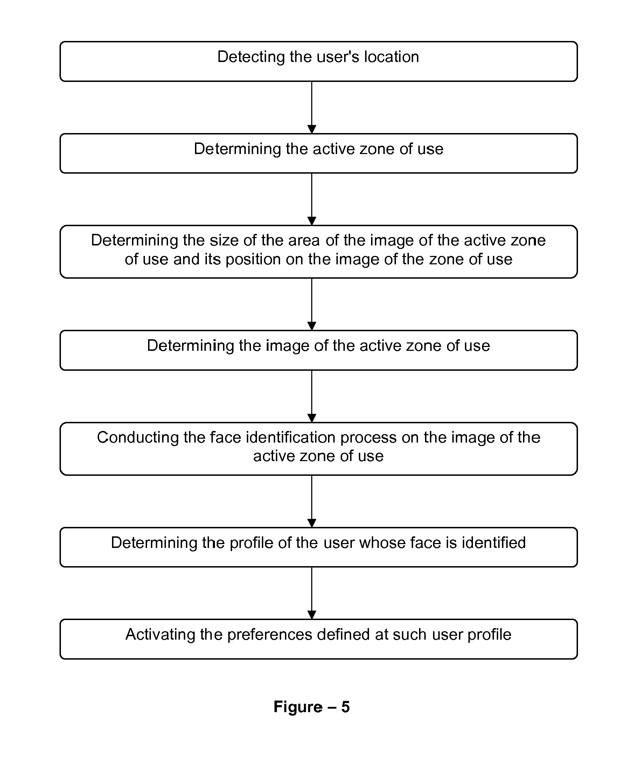

The process steps of the method used in the preferred system are illustrated in Figure 5. Accordingly, the method used in the system comprises the steps of
- detecting the user's location,
- determining the active zone of use,
- determining the size of the area of the image of the active zone of use and its position on the image of the zone of use,
- determining the image of the active zone of use,
- conducting the face identification process on the image of the active zone of use,
- determining the profile of the user whose face is identified,
- activating the preferences defined at such user profile.
   Activating the preferences defined on the user profile is a special use and is not of the basic objectives of the present invention. Put differently, the present invention provides for an efficient and errorless identification of user. Many special process and associated functions can be conducted after such identification process.

The preferred system and method according to the present invention can be exemplified with a television. The user's location is detected once he/she transmits a signal by means of the remote control. The active zone of use is determined according to such detected location. The area of the image of the active zone of use is positioned on the image of the zone of use and the face identification techniques are applied over the image in this area. Such images can be taken from a image-taking device integrated into the television, or an external image-taking device can be used for this purpose.

The system and method according to the present invention can also be embodied differently. For instance, a movable camera capable of focusing and zooming in/out can be used in the position of such image-taking device. Such camera can also be a security camera in such a system. Once the camera that scans the room's interior detects the user's location, it can move so as to take the image area of the active zone of use and zoom to this area. The device provided on the user and used for detecting the location may be a universal control device. Thus a chamber by which more than one electronic device can be controlled with the same control device can conduct the user identification process efficiently without requiring the user to stay at a fixed location and the previously-defined user preferences and associated functions on an electronic device can be realized accordingly.

It must be emphasized that the present invention is not restricted to the system and methods referred to hereinabove and is open for developments.

## Claims

1. A method in which the user's location is detected and face identification is conducted on a zone of use of an electronic device, **characterized in that**
• the active zone of use is determined according to the location of user,
• the area of the image of the active zone of use is determined on the image of the zone of use showing the zone of use partially or completely according to the active zone of use
• the image of the active zone of use is determined on the area of the image of the active zone of use,
• face identification is conducted on the image of the active zone of use.

2. A method according to Claim 1, **characterized in that** a signal transmitted from a device provided on the user is used for detecting the location of user.

3. A method according to Claim 2, **characterized in that** said device provided on the user is a remote control capable of controlling electronic devices.

4. A method according to Claim 2, **characterized in that** said signal is detected from an electronic device.

5. A method according to Claim 4, **characterized in that** said signal is such a signal that is used for controlling an electronic device.

6. A method according to Claim 1, **characterized in that** once the user's new location is determined, the image of the zone of use is refreshed and the image of the active zone of use is determined on such refreshed image of the zone of use.

7. A method according to Claim 1, **characterized in that** the area of the image of the active zone of use has a dynamic structure.

8. A method according to Claim 7, **characterized in that** the size of the area of the image of the active zone of use and its position on the image of the zone of use change according to the location of the active zone of use in the zone of use.

9. A method according to Claim 7, **characterized in that** the area of the image of the active zone of use is determined according to the user's position in compliance with perspective rules.

10. A method according to Claim 1, **characterized in that** zooming in and/or out is performed to/from the image of the zone of use according to the area of the image of the active zone of use.

11. A method according to Claim 1, **characterized in that** the user profile is activated by which the preferences on the use of the relevant electronic device and/or by which the use criteria are defined, said user profile referring to the user whose face is identified.

12. A system in which the user's location is detected and face identification is conducted on a zone of use of an electronic device, **characterized by** comprising
• a location detection device that is capable of detecting the user's location,
• an image-taking device by which the image of the zone of use is acquired,
• a device for calculating the active zone of use, which determines the active zone of use according to the detected location of user, and determines the area of the image of the active zone of use on the image of the zone of use that shows the zone of use partially or completely according to the active zone of use,
• an image processing device determining the image of the active zone of use on the area of the image of the active zone of use,
• a user identifying device identifying the face of user from the image of the active zone of use.

13. A system according to Claim 12, **characterized by** comprising a device that transmits the signal used for detecting the user's location and that is provided on the user.

14. A system according to Claim 13, **characterized in that** said device is a remote control capable of controlling electronic devices.

15. A system according to Claim 12, **characterized in that** once the location-determining device determines the user's new location, the image-taking device refreshes the image of the zone of use and the device for calculating the active zone of use determines the area of the image of the active zone of use on such refreshed image of the zone of use.

16. A system according to Claim 12, **characterized in that** the device for calculating the active zone of use determines the size of the area of the image of the active zone of use according to the detected location of the user and in compliance with the perspective rules, and changes the position of the area of the image of the active zone of use on the image of the zone of use according to the position of the active zone of use on the zone of use and determines the area of the image of the active zone of use.

17. A system according to Claim 12, **characterized in that** the image-taking device performs zooming in and/or out to/from the image of the zone of use according to the area of the image of the active zone of use.

18. A system according to Claim 12, **characterized in that** said image-taking device is equipped with a motion system and is capable of moving so as to show the active zone of use.

19. A system according to Claim 12, **characterized in that** a multiple number of components comprised in this system are incorporated into a device within the system.

20. A system according to Claim 12 or Claim 20, **characterized in that** the devices for detecting the location, calculating the active zone of use, processing the image, and identifying the user are comprised in an integrated control structure.

21. A system according to Claim 12, **characterized in that** the user profile is activated by which the preferences on the use of the relevant electronic device and/or by which the use criteria are defined, said user profile referring to the user whose face is identified.
